(19) Europäisches Patentamt
European Patent Office
Office européen des brevets

(11) Veröffentlichungsnummer: **0 030 752**
**B1**

# (12) EUROPÄISCHE PATENTSCHRIFT

(45) Veröffentlichungstag der Patentschrift: **06.06.84**

(51) Int. Cl.³: **H 01 M 2/14**, H 01 M 6/00, H 01 M 6/12

(21) Anmeldenummer: **80201125.4**

(22) Anmeldetag: **28.11.80**

(54) **Galvanische Primär-Zelle für kleine Lastströme und lange Lager- und Gebrauchsdauer.**

(30) Priorität: **13.12.79 CH 11047/79**

(43) Veröffentlichungstag der Anmeldung: **24.06.81 Patentblatt 81/25**

(45) Bekanntmachung des Hinweises auf die Patenterteilung: **06.06.84 Patentblatt 84/23**

(84) Benannte Vertragsstaaten: **AT BE DE FR GB IT NL SE**

(56) Entgegenhaltungen:
**DE - B - 1 094 829**
**FR - A - 918 975**
**US - A - 2 866 841**
**US - A - 3 485 672**

(73) Patentinhaber: **Leclanché S.A., 48, Avenue de Grandson, CH-1401 Yverdon Kanton Waadt (CH)**

(72) Erfinder: **Ruetschi Paul, Dr., Rue Henri-Gorrevon 25, CH-1400 Yverdon/VD (CH)**

(74) Vertreter: **Tschudi, Lorenz et al, Bovard AG Patentanwälte VSP Optingenstrasse 16, CH-3000 Bern 25 (CH)**

**EP 0 030 752 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Diese Erfindung betrifft eine galvanische Primär-Zelle für kleine Lastströme und lange Lager- und Gebrauchsdauer gemäß dem Oberbegriff des Patentanspruches 1.

Es ist bekannt, daß in galvanischen Primär-Zellen, während langzeitiger Lagerung, sowohl als während des Gebrauches, eine Selbstentladung stattfindet. Sie ist bedingt durch chemische oder elektrochemische Seiten-Reaktionen, welche zusätzlich zum eigentlichen stromliefernden Vorgang auftreten. Insbesonders für Zellen langer Gebrauchsdauer gilt es, diese Selbstentladungs-Reaktionen nach Möglichkeit zu beseitigen oder zu verlangsamen.

Je nach Batterie-System werden vom Fachmann hierzu geeignete, bekannte Mittel verwendet.

In alkalischen Primär-Zellen, mit Zink als negativer Elektrode, tritt z. B. als Selbstentladungs-Reaktion die Bildung von Wasserstoff auf:

$$Zn + H_2O \rightarrow ZnO + H_2 \qquad (1)$$

Sie kann durch sorgfältige Amalgamierung weitgehend, aber nicht völlig, unterbunden werden (P. Ruetschi, J. Electrochemical Society, Vol. 114, p. 301 (1967).

Eine weitere Selbstentladungs-Reaktion ist durch die Löslichkeit des aktiven Materials ($HgO$ oder $Ag_2O$) der positiven Elektrode bedingt. Das im Elektrolyten gelöste aktive Material diffundiert durch die Separatorenschicht hindurch zur negativen Zinkelektrode, an welcher es sich reduziert, wobei eine äquivalente Menge von Zink oxydiert wird. Für den Fall einer Quecksilberoxyd-Elektrode läßt sich dieser Vorgang wie folgt formulieren:

$$HgO + H_2O \rightarrow Hg(OH)_2 \text{ (gelöst)} \qquad (2)$$

$$Hg(OH)_2 \text{ (gelöst)} + Zn \rightarrow ZnO + Hg + H_2O$$

In der schweizerischen Patentschrift 607 343 ist eine als »Filter-Elektrode« bezeichnete Anordnung beschrieben, welche die Selbstentladung, die durch die Löslichkeit des positiven, aktiven Materials bedingt ist, herabsetzen soll. Die Filter-Elektrode besteht aus einer Schicht von elektronisch leitendem, mikroporösen Material, welches die gesamte elektrochemisch aktive geometrische Oberfläche der positiven Elektrode, welche der negativen Elektrode zugewandt ist, bedeckt, und welches die Diffusion von aktivem Material, welches im Elektrolyten gelöst ist, verlangsamt.

Die Filter-Elektrode hat sich als taugliches Mittel zur Herabsetzung der Selbstentladung erwiesen. Ihr Nachteil ist jedoch, daß sie relativ dick ausgebildet werden muß, um die Diffusion von gelöstem aktivem Material wirksam zu vermindern. Dieser Nachteil wirkt sich besonders störend aus, wenn sehr flache Zellen, z. B. in Knopfform gebaut werden müssen. Die Filterelektrode nimmt dann zu viele Innenvolumen weg, wodurch die Energiedichte der Zelle abnimmt.

In der schweizerischen Patentschrift 630 492 ist eine Anordnung für eine Zelle langer Lebensdauer beschrieben, in der eine Depolarisatorschicht aus Mangandioxyd, welche gegen die Separatorenschicht angeordnet ist, die Diffusion von gelöstem aktivem Material ($HgO$ oder $Ag_2O$) verhindern soll. Diese Anordnung weist aber ebenfalls den Nachteil auf, daß die Energiedichte kleiner wird, weil Mangandioxyd eine kleinere Kapazität pro Volumeneinheit abgibt als Quecksilber- oder Silberoxyd.

Es ist weiter eine »wasserarme, alkalische Primär-Zelle mit langer Lebensdauer« vorgeschlagen, welche eine verminderte Selbstentladung aufweist. Sie basiert auf der Entdeckung, daß die Diffusion von gelöstem Quecksilber- oder Silberoxyd im Elektrolyten bei sehr hoher Elektrolytkonzentration abnimmt. Durch Verminderung des Wassergehaltes der Zelle auf ein Verhältnis von $H_2O : NaOH$ von weniger als 2,7 von $H_2O : KOH$ von weniger als 3,1, und von $H_2O : RbOh$ von weniger als 4, gelingt es, die Selbstentladung drastisch zu senken.

Der einzige Nachteil dieser Maßnahme ist, daß der Innenwiderstand der Zelle, infolge des hohen Gefrierpunktes des Elektrolyten, bei abnehmender Temperatur sehr stark ansteigt, was bei 0 bis —10° C für gewisse Anwendungen, wie in Uhren, zu unerwünscht hohen Werten des Innenwiderstandes führt.

Aus der US-A-2 866 841 ist es bekannt, zwischen der positiven und der negativen Elektrode eine dünne, aus inertem Material bestehende, elektrolytundurchlässige Folie mit mindestens einer Öffnung vorzusehen, wobei die Schichtdicke l der Folie und der Öffnungsradius $r_i$ der Beziehung $\frac{4l}{r_i} \leq 10$ genügt.

Aufgabe der vorliegenden Erfindung ist es, eine Anordnung zur Verminderung der Selbstentladung in galvanischen Primär-Zellen zu schaffen, welche die oben erwähnten Nachteile der anderen beschriebenen Maßnahmen nicht aufweist, und welche die Selbstentladung um einen Faktor 10 oder mehr herabsetzt.

Dies wird erfindungsgemäß dadurch erzielt, daß die Öffnungsfläche der Apertur bzw. aller Aperturen zusammengenommen mindestens zehnmal kleiner ist als die Fläche der Folie (7).

Die erfindungsgemäße Anordnung führt zu keiner nennenswerten Verminderung der Energiedichte

der Zellen. Die erfindungsgemäße Anordnung bietet auch Vorteile bei Verwendung von Elektrolyten mit tiefstem Gefrierpunkt. Sie kann auch zusätzlich zu den bekannten erwähnten Maßnahmen verwendet werden.

Im folgenden wird anhand der Zeichnung ein Ausführungsbeispiel der Erfindung näher beschrieben. Es zeigt

Fig. 1 einen Querschnitt durch eine flache Knopfzelle,

Fig. 2 den Verlauf der Kapazität als Funktion der Lagerdauer.

Gemäß Fig. 1 ist bei einer flachen Knopfzelle zwischen der positiven Elektrode 2 und der negativen Elektrode 4 zusätzlich zur Separatorenschicht 3 eine sehr dünne, elektrolytundurchlässige, inerte Folie 7 angeordnet, welche eine durch Durchstechen, Stanzen oder Schmelzen erzeugte, sehr kleine, stromfokussierende Öffnung (Apertur) 8 aufweist. Der gesamte elektrolytische Strom wird durch diese Apertur 8 fokussiert. Die elektrolytundurchlässige Folie 7 weist eine möglichst geringe Dicke auf. In der Praxis hat sich eine Dicke von 5 bis 50 µm als geeignet erwiesen. Die untere Grenze der Dicke der Folie ist in der Praxis dadurch begrenzt, daß sie noch eine ausreichende mechanische Festigkeit aufweist, welche zur Verarbeitung ausreicht, und daß sie auch nach Alterung in der Zelle noch chemisch intakt und elektrolytundurchlässig bleibt. Geeignete Materialien für die Folie sind Kunststoffe, die gegen den in der Zelle vorliegenden Elektrolyten sowie gegen die in ihm gelösten Stoffe, chemisch beständig sind. Für viele Lithium-Primär-Zellen mit nicht wässerigen flüssigen Elektrolyten sowie für alkalische Primär-Zellen eignen sich z. B. Teflon und Polypropylen als Folienmaterial. Als Folienmaterial kommen neben inerten Kunststoffen auch inerte Metalle, wie z. B. Nickel und »Inconel®«, in Frage.

Gemäß Fig. 1 ist die elektrolytundurchlässige Folie 7 am Rande 9 der Zelle zwischen positiver Elektrode 2 und Dichtungsring 6 dicht eingeklemmt. Dadurch werden allfällige Kurzschlüsse zwischen den Elektroden infolge Bewegung fester oder flüssiger leitfähiger Teilchen um den Rand des Separators herum, vermieden. Zwischen erfindungsgemäßer Folie mit stromfokussierender Apertur 8 und positiver Elektrode 2 wird mit Vorteil der Separator 3 in Form eines elektrolytgetränkten Vlieses oder Filzes, oder einer elektrolytgetränkten mikroporösen Membran, oder ein anderer, handelsüblicher inerter Separator eingelegt. Statt diesem Separator 3, oder zusätzlich zu ihm, kann auch eine »Filter-Elektrode« nach schweizerischer Patentschrift 607 343, eingelegt werden. Diese Maßnahme verhindert, daß positives aktives Material unmittelbar vor die Eingangsöffnung der Apertur 8 zu liegen kommt.

Die Folie mit stromfokussierender Apertur kann mit Vorteil zwischen zwei handelsüblichen Separatoren, z. B. Polypropylen-Filzen, eingeordnet sein. Dazu können auf der Seite der Separatorschicht, welche der negativen Elektrode zugewandt ist, weitere handelsübliche Separatoren angebracht werden, wie z. B. Cellophan-Folien. Der Durchmesser der mechanisch erzeugten Öffnung (Apertur) 8 in der Folie 7 kann dem elektrochemischen System und der Anwendung angepaßt werden. Im allgemeinen wird die Kleinheit der Apertur 8 durch die Größe des tolerierbaren elektrischen Innenwiderstandes begrenzt sein.

Der Elektrolytwiderstand in der Apertur errechnet sich nach

$$R_i = \frac{\rho \cdot l}{\pi \cdot r_i^2} \qquad (3)$$

wobei $\rho$ der spezifische Elektrolytwiderstand (Ωcm), $l$ die Dicke der Folie (cm) und $r_i$ der Radius (cm) der Apertur bedeutet.

Der Elektrolytwiderstand außerhalb der Apertur errechnet sich nach dem einfachen sphärischen Modell der Fig. 1 ungefähr nach

$$R_e = \rho \int_{r=r_i}^{r=r_e} \frac{d(r_e)}{4\pi r_e^2} = \frac{\rho}{4\pi r_i} - \frac{\rho}{4\pi r_e} \qquad (4)$$

wobei $r_e$ den Innenradius der Zelle bezeichnet.

Es liegt nun im Sinne der Erfindung, daß die Hinderung der Diffusion von gelöstem, positiven, aktivem Material analogen Gesetzen gehorcht, wie der elektrische Widerstand. Um mittels der Apertur eine möglichst starke relative Hinderung der Diffusion zu erreichen, müssen die Bedingungen so gewählt werden, daß bei minimaler Foliendicke $l \rightarrow 0$ ($R_i \rightarrow 0$) die Diffusion durch die Apertur gleichwohl noch stark gebremst wird, daß also $r_i \ll r_e$ sein muß, also $R_e \gg 0$.

In der Praxis heißt dies, daß z. B. etwa

$$r_i \leq \frac{1}{3} r_e .$$

Die Fläche der Apertur wäre dann z. B. mindestens zehnmal kleiner als die geometrische Oberfläche

der Separatorschicht zwischen positiver und negativer Elektrode.

Es liegt ferner im Sinn der Erfindung, daß die Hinderung der Diffusion vor der Apertur nicht vernachlässigbar ist gegenüber der Hinderung in der Apertur. Dies kann durch die Bedingung ausgedrückt werden:

$$R_i \leq 10\,R_e \text{ oder } \frac{4l}{r_i} \lesssim 10$$

Für eine Foliendicke l von beispielsweise 0,005 cm (50 μm) wird der Radius $r_i$ der Apertur deshalb größer als 0,002 cm gewählt.

Trotz der, auf den ersten Blick sinnwidrig anmutenden, beinahe kompletten Trennung der Zelle durch die stromfokussierende Folie in zwei beinahe komplett isolierte Abteile, je eines für die positive und eines für die negative Elektrode, bleibt der totale Innenwiderstand der Zelle in vernünftigen Grenzen, wenn die Folie gemäß vorliegender Erfindung nur eine sehr geringe Dicke aufweist. So errechnet sich beispielsweise für eine Foliendicke von 0,005 cm (50 μm) und einen Radius der Apertur von 0,01 cm bei einem spezifischen Elektrolytwiderstand von 2 Ωcm, der Elektrolytwiderstand in der Apertur zu $R_i = 32\,\Omega$ und der Elektrolytwiderstand außerhalb der Apertur zu $R_e = 16\,\Omega$, der gesamte, durch die Folie verursachte Widerstand also zu 48 Ω.

Die gemäß vorliegender Erfindung eingesetzte Folie mit stromfokussierender Apertur stellt ein sehr reproduzierbares Mittel dar, um den mittleren Diffusionsweg des gelösten aktiven Materials im Elektrolyten zu verlängern. Dagegen sind mikroporöse Membrane, welche bis anhin als Diffusions-Barrieren eingesetzt wurden, technologisch nur schwierig mit reproduzierbaren Diffusionseigenschaften herzustellen.

Statt einer einzigen Apertur können natürlich auch mehrere in der erfindungsgemäßen Folie angebracht werden. Dabei müßte, im Sinne der Erfindung, die Gesamtfläche der Aperturen sehr viel kleiner sein als die Separatorfläche. Des weiteren müßten die Aperturen so verteilt sein, daß sich wenigstens auf der Seite der Folie, welche der positiven Elektrode zugewandt ist, an der Folienoberfläche nicht vernachlässigbare lokale Konzentrationsunterschiede des gelösten positiven, aktiven Materials ausbilden. Anders ausgedrückt, es sollte sich ein höherer Außenwiderstand $R_e$ ausbilden, als im Falle eines üblichen mikroporösen Membranes mit sehr vielen uniform verteilten kleinen Poren über die gesamte Separatorfläche.

Die Apertur nach vorliegender Erfindung kann auch gegen den Rand der Zelle angebracht sein.

Die Folie mit stromfokussierender Apertur, nach vorliegender Erfindung, kann in allen galvanischen Primär-Elementen, welche nur kleine Ströme zu liefern haben, und in welchen die Löslichkeit des positiven aktiven Materials zu Selbstentladungsprozessen führt, mit Vorteil verwendet werden, also z. B. in alkalischen Primär-Zellen, sowohl als auch in diversen Lithium-Zellen.

Im folgenden sei die Wirksamkeit der Erfindung am Beispiel einer alkalischen Primär-Zelle mit positiver Elektrode aus Quecksilberoxyd und negativer Elektrode aus Zinkpulver illustriert. Die Versuchszellen waren nach Fig. 1 in Knopfform gebaut. Ihr Durchmesser betrug 11,6 mm, ihre Höhe 4,2 mm.

Becher 1 und Deckel 5 waren in bekannter Weise, nach schweizerischer Patentschrift 508 283, ausgeführt. Die negative Elektrode 4 bestand aus amalgamiertem Zinkpulver (10,3% Hg) und die positive Elektrode 2 aus Quecksilberoxyd, welchem Graphit und Mangandioxyd beigemischt waren. Die Separator-Schicht 3 bestand aus einem handelsüblichen Baumwollvlies, welches mit der Zinkelektrode in Berührung stand, drei Cellophan-Folien der Firma Dupont, Pudo 193, und einem Polypropylen-Filz. Eine Anzahl Zellen wurden auf der positiven Seite der Separatorschicht zusätzlich mit der Folie mit stromfokussierender Apertur versehen. Die Folie bestand aus Teflon, hatte eine Dicke von 0,05 mm (50 μm) und war zwische zwei Polypropylen-Filzen angeordnet. Die Apertur wurde durch Durchstechen mittels einer Nadel erzeugt. Der effektive Aperturradius betrug schätzungsweise 0,05 mm. Der Elektrolyt bestand aus 49%iger Kalilauge.

In Tabelle 1 sind elektrische Daten, welche an den Zellen gemessen wurden, zusammengestellt.

Tabelle 1

Elektrische Meßwerte bei 20° C von Quecksilberoxyd – Zink-Zellen, Durchmesser 11,6 mm, Höhe 4,2 mm

| | Vergleichszellen ohne Folie mit stromfokussierender Apertur | Zellen nach Erfindung mit Folie mit stromfokussierender Apertur |
|---|---|---|
| Spannung bei offenem Stromkreis | 1,37 V | 1,37 V |
| Mittlere Spannung bei 10 Ω Last nach 3 Sekunden | 0,8 V | 0,03 V |
| Mittlerer Innenwiderstand, gemessen bei 40 Hz | 7 Ω | 600 Ω |

Die Zellen nach Erfindung haben naturgemäß einen sehr viel höheren Innenwiderstand.

Zur beschleunigten Alterung und zwecks Ermittlung der Selbstentladung wurden die Zellen bei 75° C in einem Wärmeschrank gelagert. Periodisch wurden dem Wärmeschrank Zellen entnommen und bei Raumtemperatur unter einer Last von 10 kΩ entladen. Die Resultate sind in Tabelle 2 dargestellt.

Tabelle 2

| Lagerdauer bei 75° C (h) | Kapazität (mAh) Vergleichszellen | Zellen nach Erfindung |
|---|---|---|
| 0 | 174 | 169 |
| 1000 | 177 | 180 |
| 2000 | 24 | 177 |
| 3000 | 0 | 175 |
| 4000 | 0 | 174 |
| 5000 | 0 | 167 |
| 6000 | 0 | 165 |

Diese Resultate sind in Fig. 2 graphisch dargestellt. Sie demonstrieren die außergewöhnliche Steigerung der Lagerfähigkeit, welche durch die Verwendung der erfindungsgemäßen Folie mit stromfokussierender Apertur erzielt wird. Die Selbstentladung der Zellen mit Apertur beträgt nur etwa 20 mAh, oder 11% pro Jahr bei 75° C. Theoretische, sowohl als experimentelle Argumente haben gezeigt, daß bei 25° C die Selbstentladung 15- bis 20mal kleiner ist als bei 75° C. Bei Raumtemperatur beträgt also die Selbstentladung der erfindungsgemäßen Zelle weit weniger als 1% Kapazitätsverlust pro Jahr. Diese Zellen eignen sich deshalb für Anwendungen, in denen eine Gebrauchsdauer von 10 bis 20 Jahren angestrebt wird.

Das Resultat von Tabelle 2 und Fig. 2 ist für den Fachmann um so überraschender als bekannt ist, daß während der Lagerung bei hohen Temperaturen die Selbstentladung nicht nur durch die Diffusion von gelöstem Quecksilberdioxyd, sondern vor allem auch durch die Wasserstoffentwicklung an der Zinkelektrode bedingt ist. Das Resultat von Tabelle 2 und Fig. 2 kann vielleicht dadurch erklärt werden, daß bei Zellen ohne Folie mit stromfokussierender Apertur die Diffusion von gelöstem Quecksilberoxyd wohl primär zu einer Oxydation von Zink nach Reaktion (2) führt, daß aber in der Folge durch die erfolgte lokale Oxydierung von Zink an der Oberfläche der Elektrode, wobei nach Reaktion (2) auch $H_2O$ entsteht, die Zinkelektrode dann gemäß Reaktion (1) »sekundär« Wasserstoff entwickelt und dadurch eine zusätzliche Selbstentladung erfährt. In Gegenwart einer Folie mit stromfokussierender Apertur, nach Erfindung, diffundiert weit weniger gelöstes Quecksilberoxyd zur Zinkelektrode und in der Folge tritt an der letzeren auch eine geringere »sekundäre« Wasserstoffentwicklung auf.

Über die mittels Gleichungen (3) und (4) errechenbare Verminderung der Selbstentladung durch

Verhinderung der Quecksilberoxyd-Diffusion mittels stromfokussierender Apertur hinaus, scheint also noch zusätzlich ein weiterer, unerwarteter Vorteil mit der erfindungsgemäßen Anordnung verbunden zu sein.

Es ist noch wichtig festzuhalten, daß weder bei Vergleichszellen noch bei Zellen nach Erfindung eine nennenswerte Schwellung der Zellen durch Ansammlung von Wasserstoff in der negativen Elektrode beobachtet wurde, und dies sowohl nach Lagerung bei Zimmertemperatur, als auch nach Heißlagerung bei 75° C. In jedem Falle blieb die Schwellung unter 0,1 mm. Die nach Erfindung verwendeten, sehr dünnen Folien sind anscheinend genügend durchlässig für gasförmigen Wasserstoff, so daß dieser zur positiven Elektrode hindurchdiffundieren kann, wo er zu Wasser oxydiert wird.

## Patentansprüche

1. Galvanische Primär-Zelle für kleine Lastströme und lange Lager- und Gebrauchsdauer, bei der zwischen der positiven Elektrode (2) und der negativen Elektrode (4) eine dünne, aus inertem Material bestehende, elektrolytundurchlässige Folie (7) mit mindestens einer stromfokussierenden Apertur (8) angebracht ist, wobei die Schichtdicke l der Folie und der Aperturradius $r_i$ der Beziehung $\frac{4l}{r_i} \leq 10$ gehorchen, dadurch gekennzeichnet, daß die Öffnungsfläche der Apertur bzw. aller Aperturen zusammengenommen mindestens zehnmal kleiner ist als die Fläche der Folie (7).

2. Galvanische Primär-Zelle nach Anspruch 1, dadurch gekennzeichnet, daß die elektrolytundurchlässige Folie (7) mit der stromfokussierenden Apertur (8) eine Dicke l von 0,0005 bis 0,005 cm aufweist.

3. Galvanische Primär-Zelle nach Anspruch 1, dadurch gekennzeichnet, daß die elektrolytundurchlässige Folie (7) aus einem gegen den Elektrolyten und darin gelöstem positiven, aktiven Material inerten Kunststoff besteht.

4. Galvanische Primär-Zelle nach Anspruch 1, dadurch gekennzeichnet, daß die elektrolytundurchlässige Folie (7) aus einem gegen den Elektrolyten und darin gelöstem positiven, aktiven Material inerten Metall besteht.

5. Galvanische Primär-Zelle nach Anspruch 1, dadurch gekennzeichnet, daß sie die Form einer flachen Knopfzelle aufweist, wobei eine Separatorschicht (3) samt Folie mit stromfokussierender Apertur am Rande der Zelle zwischen der positiven Elektrode und einem Dichtungsring (6) fest eingeklemmt sind.

6. Galvanische Primär-Zelle nach Anspruch 5, dadurch gekennzeichnet, daß die elektrolytundurchlässige Folie (7) mit der stromfokussierenden Apertur (8) auf der Oberfläche der positiven Elektrode (2) angebracht aufliegt.

7. Galvanische Primär-Zelle nach Anspruch 5, dadurch gekennzeichnet, daß die elektrolytundurchlässige Folie (7) mit der stromfokussierenden Apertur (8) zwischen zwei Separatorschichten angebracht ist.

## Claims

1. A galvanic primary cell for low current loads and long storage and service life wherein a thin foil (7) of inert material impermeable to electrolyte with at least one current-focusing aperture, is disposed between the positive electrode (2) and the negative electrode (4), whereby the layer thickness l of the foil and the radius $r_i$ of aperture conform to the relationship $\frac{4l}{r_i} \leq 10$ characterized in that the area of the aperture or all apertures together respectively is at least ten times smaller than the area of the foil (7).

2. A galvanic primary cell according to claim 1, characterized in that the foil (7), impermeable to the electrolyte, with the current-focusing aperture (8) has a thickness l of from 0.0005 to 0.005 cm.

3. A galvanic primary cell according to claim 1, characterized in that the foil (7), impermeable to the electrolyte , is of a plastic inert to the electrolyte and to positive, active material dissolved therein.

4. A galvanic primary cell according to claim 1, characterized in that the foil (7), impermeable to the electrolyte, is of a metal inert to the electrolyte and to positive, active material dissolved therein.

5. A galvanic primary cell according to claim 1, characterized in that it takes the form of a flat button cell whereby a separator layer (3) including foil with current-focusing aperture are firmly clamped at the edges of the cell between the positive electrode and a sealing ring (6).

6. A galvanic primary cell according to claim 5, characterized in that the foil (7), impermeable to the electrolyte, with the current-focusing aperture (8) lies on the surface of the positive electrode (2).

7. A galvanic primary cell according to claim 5, characterized in that the foil (7), impermeable to the electrolyte with the current-focusing aperture (8) is disposed between two separator layers.

**Revendications**

1. Cellule primaire galvanique pour des courants de charge bas et une grande durée de stockage et d'utilisation, dans laquelle se trouve disposée, entre l'électrode positive (2) et l'électrode négative (4) une mince feuille (7) faite d'un matériau inerte et imperméable à l'électrolyte, qui présente au moins une ouverture focalisatrice de courant, la relation entre l'épaisseur l de la feuille et le rayon $r_i$ de l'ouverture satisfaisant l'expression $\frac{4l}{r_i} \leq 10$, caractérisée en ce que la surface ouverte de l'ouverture, ou de toutes les ouvertures prises ensemble, est au moins dix fois plus petite que la surface de la feuille (7).

2. Cellule primaire galvanique selon la revendication 1, caractérisée en ce que la feuille (7) imperméable à l'électrolyte, munie de l'ouverture focalisatrice de courant (8), présente une épaisseur l de 0,0005 à 0,005 cm.

3. Cellule primaire galvanique selon la revendication 1, caractérisée en ce que la feuille (imperméable à l'électrolyte) consiste en une matière synthétique inerte à l'égard des électrolytes et du matériau actif, positif, qui y est dissout.

4. Cellule primaire galvanique selon la revendication 1, caractérisée en ce que la feuille (7) imperméable à l'électrolyte consiste en un métal inerte à l'égard des électrolytes et du matériau actif, positif, qui y est dissout.

5. Cellule primaire galvanique selon la revendication 1, caractérisée en ce qu'elle présente la forme d'une cellule-bouton plate, la couche séparatrice (3), avec la feuille munie de l'ouverture focalisatrice de courant, sont fermement pincées au bord de la cellule entre l'électrode positive et un anneau d'étanchéité (6).

6. Cellule primaire galvanique selon la revendication 5, caractérisée en ce que la feuille (7) imperméable à l'électrolyte et munie de l'ouverture focalisatrice de courant (8) est disposée couchée sur la surface supérieure de l'électrode positive (2).

7. Cellule primaire galvanique selon la revendication 5, caractérisée en ce que la feuille (7) imperméable à l'électrolyte et munie de l'ouverture focalisatrice de courant (8) est disposée entre deux couches de séparateur.

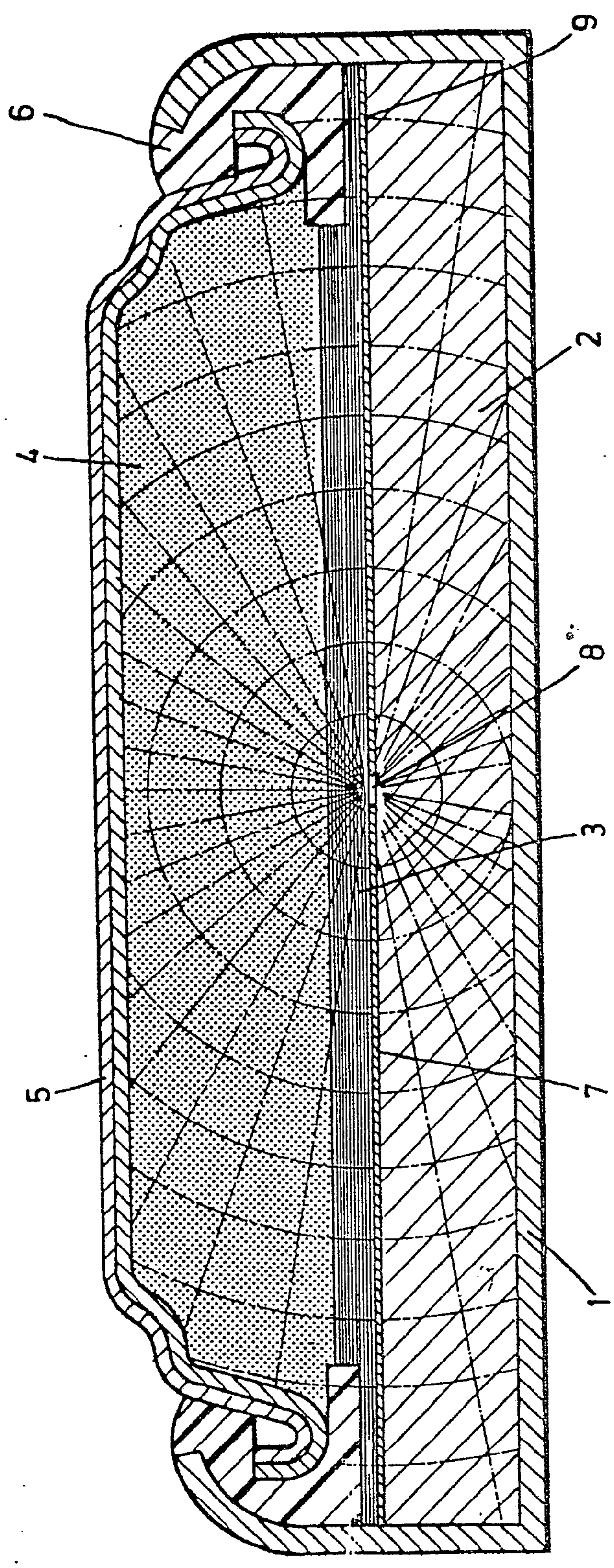


Fig. 1.

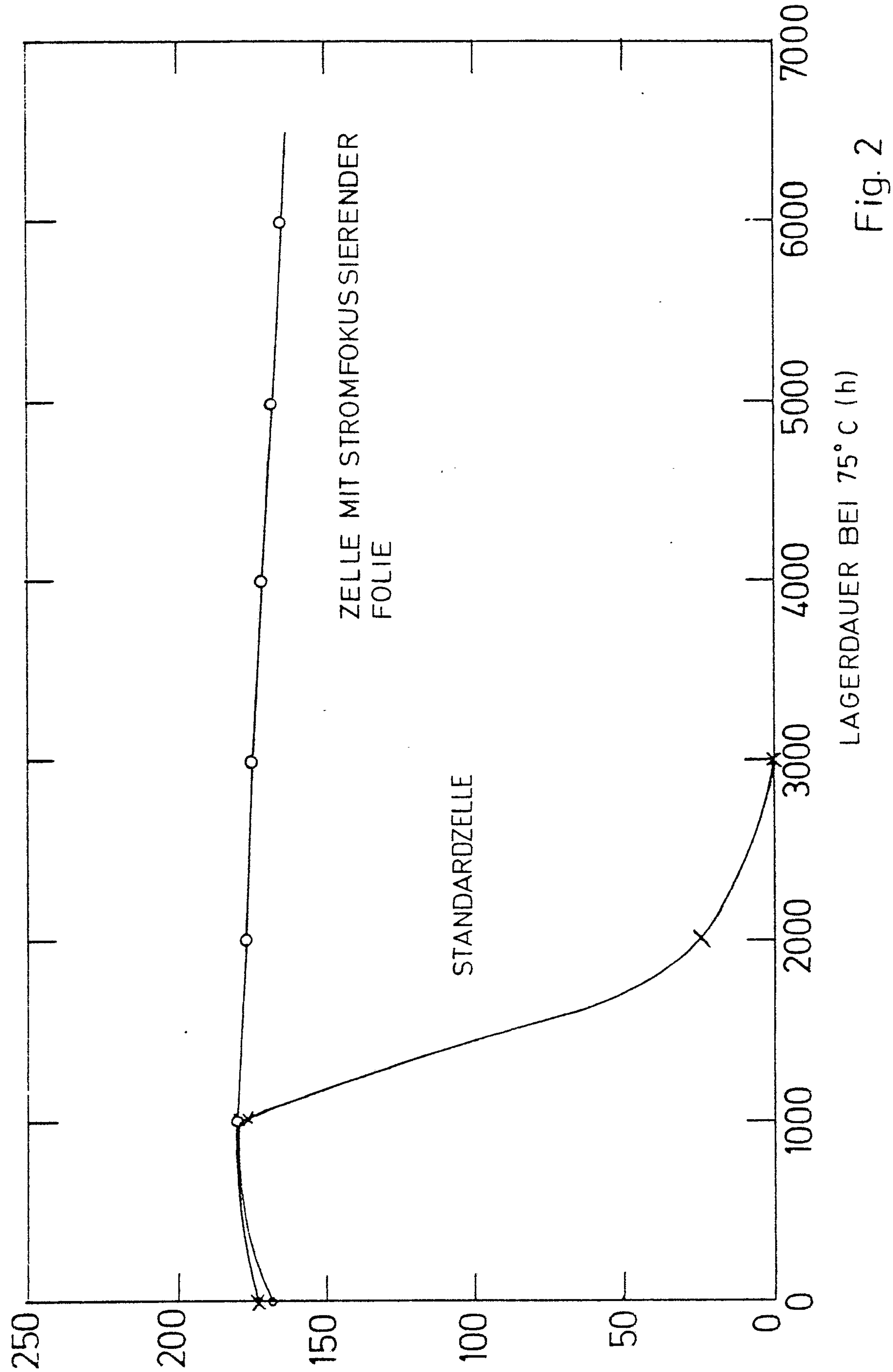

ZELLE MIT STROMFOKUSSIERENDER FOLIE
STANDARDZELLE
KAPAZITÄT (mAh)
0
50
100
150
200
250
LAGERDAUER BEI 75° C (h)
0
1000
2000
3000
4000
5000
6000
7000


Fig. 2